# DEMANDE DE BREVET EUROPEEN

(11) **EP 3 165 391 A1**
(43) Date de publication de la demande: **10.05.2017**
(21) Numéro de dépôt: 16194518.3
(22) Date de dépôt: 19.10.2016
(51) Int. Cl.: B60K 15/035, B60K 3/04, B60K 25/00

(54) **SYSTÈME DE PRODUCTION D'ÉNERGIE ÉLECTRIQUE POUR UN VÉHICULE AUTOMOBILE**

(30) Priorité: 29.10.2015 FR 1560376
(71) Demandeur: Valeo Systemes de Controle Moteur, 95800 Cergy Saint Christophe (FR)
(72) Inventeur: POTTEAU, Sébastien, 78510 TRIEL SUR SEINE (FR)
(74) Mandataire: Garcia, Christine

(57) **Abrégé**

L'invention concerne un système (1) de production d'énergie électrique pour un véhicule automobile, ce système comportant :
- un circuit (2) agencé pour être relié à un réservoir de carburant (3) du véhicule et agencé pour recevoir un gaz issu de l'évaporation du carburant,
- une turbine à gaz (5) comportant un organe rotatif (6) agencé pour fournir un couple mécanique de sortie, cette turbine à gaz étant agencée pour produire le couple mécanique à partir de la combustion du gaz provenant du circuit,
- un générateur électrique (7) accouplé à l'organe rotatif de la turbine et recevant le couple de sortie pour produire de l'énergie électrique.

## Description

La présente invention concerne un système de production d'énergie électrique pour un véhicule automobile.

De manière traditionnelle, l'essence étant un carburant volatile, les réservoirs de carburant, notamment de véhicule essence, sont équipés d'un système de purge canister permettant de recirculer ces vapeurs d'essence vers le moteur thermique. La réglementation interdit de remettre ces vapeurs contenant de l'essence dans l'atmosphère.

Le rendement de ce type de conversion énergétique est très faible car il est difficile d'estimer la quantité de vapeur d'essence et la quantité d'air.

En outre, un problème lié à ce type de système de purge canister est qu'il doit emmagasiner beaucoup de vapeur d'essence lors d'une phase de stockage prolongée. Or plus le réservoir de stockage de vapeur est important plus il prend de place et est couteux.

Un autre problème lié à ce type de système de purge canister est lié à l'hybridation électrique des véhicules. En effet, dans le cas d'un véhicule hybride, il est important de ne faire fonctionner le moteur thermique que sur son point de meilleur rendement et d'éviter de le faire fonctionner autant que possible.

Ceci rend plus complexe encore plus les conditions favorables à l'utilisation de la purge canister.

L'invention vise à remédier à ces problèmes.

L'invention a ainsi pour objet un système de production d'énergie électrique pour un véhicule automobile, ce système comportant :
- un circuit agencé pour être relié à un réservoir de carburant du véhicule et agencé pour recevoir un gaz issu de l'évaporation du carburant,
- une turbine à gaz comportant un organe rotatif agencé pour fournir un couple mécanique de sortie, cette turbine à gaz étant agencée pour produire le couple mécanique à partir de la combustion du gaz provenant du circuit,
- un générateur électrique accouplé à l'organe rotatif de la turbine et recevant le couple de sortie pour produire de l'énergie électrique.

Grâce à l'invention, il est possible d'utiliser en temps réel les gaz qui, dans une situation traditionnelle iraient vers la purge canister, pour les transformer en énergie électrique et la stocker dans une batterie.

Ceci permet un gain de place et de coût tout en permettant une charge électrique supplémentaire pour la batterie, notamment lors de phases d'arrêt du véhicule.

Le générateur est notamment agencé pour générer une puissance électrique inférieure à 5 kWatts, notamment inférieure à 3 kWatts, par exemple inférieure à 1 kWatt. Cette puissance est notamment comprise entre 200Watts et 1 kWatt.

De préférence, la turbine présente un diamètre extérieur inférieur à 50 mm, notamment inférieur à 25 mm, par exemple inférieur à 20 mm. Ce diamètre est notamment compris entre 10 et 30 mm.

Notamment la turbine à gaz comporte une chambre de combustion pour permettre la combustion de gaz issu du circuit.

Avantageusement l'organe rotatif de la turbine comporte des aubes.

Notamment la turbine comporte une entrée connectée au circuit pour recevoir le gaz issu de l'évaporation du carburant, et au moins une sortie pour l'évacuation de gaz issu de la combustion dans la turbine.

De préférence la turbine comporte au moins une entrée d'air pour permettre la combustion. L'air est mixé avec le carburant gazeux venant du réservoir, puis rentre dans la chambre de combustion de la turbine, les gaz chauds passent ensuite au travers de l'organe rotatif, qui y sont détendus, ce qui fournit de l'énergie à la turbine.

Notamment le circuit comporte un organe de régulation agencé pour sélectivement autoriser ou empêcher la circulation de gaz issu du réservoir à carburant vers la turbine.

Par exemple le générateur électrique est connecté électriquement à une batterie, notamment une batterie.

Avantageusement le système est dépourvu de canister pour le stockage de gaz issu de l'évaporation du carburant.

Le système est de préférence agencé de sorte que le gaz issu de l'évaporation du carburant n'est pas utilisé dans la combustion du moteur à combustion du véhicule.

L'invention sera mieux comprise et d'autres détails, caractéristiques et avantages de l'invention apparaîtront à la lecture de la description suivante faite à titre d'exemple non limitatif en référence au dessin annexé dans lequel :
- la figure 1 est une vue schématique et partielle, d'un système selon un exemple de réalisation de l'invention,
- la figure 2 illustre, schématiquement et partiellement, la turbine du système de la figure 1.

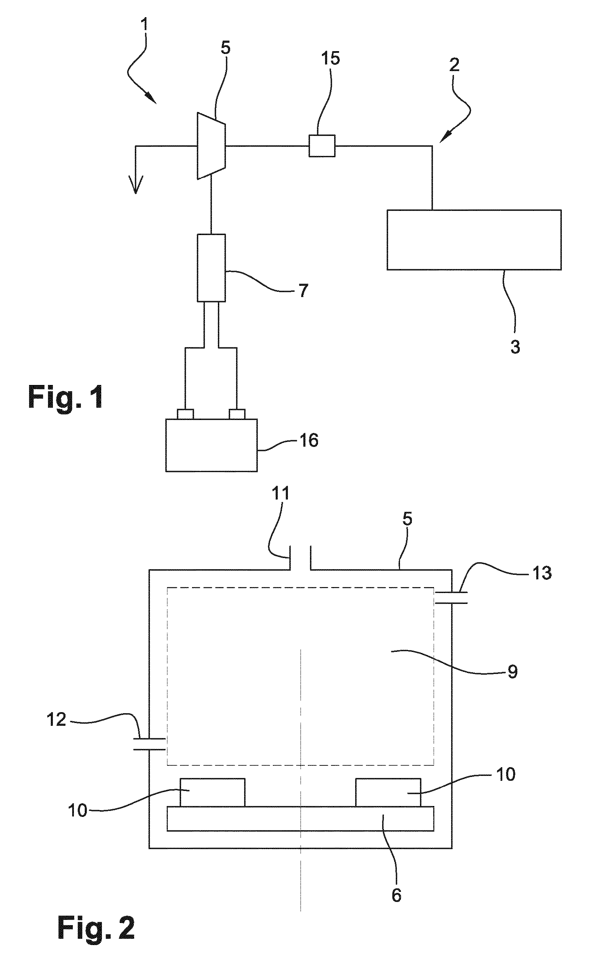

On a représenté sur la figure 1 un système 1 de production d'énergie électrique pour un véhicule automobile, ce système comportant :
- un circuit 2 agencé pour être relié à un réservoir de carburant 3 du véhicule et agencé pour recevoir un gaz issu de l'évaporation du carburant,
- une turbine à gaz 5 comportant un organe rotatif 6 agencé pour fournir un couple mécanique de sortie, cette turbine à gaz 5 étant agencée pour produire le couple mécanique à partir de la combustion du gaz provenant du circuit 2,
- un générateur électrique 7 accouplé à l'organe rotatif 6 de la turbine 5 et recevant le couple de sortie pour produire de l'énergie électrique.

L'organe rotatif 6 est capable de tourner autour d'un axe de rotation X.

Le générateur 7 est agencé pour générer une puissance électrique comprise entre 200W et 1 kW.

La turbine 5 présente un diamètre extérieur inférieur à 20 mm.

Comme illustré sur la figure 2, la turbine à gaz 5 comporte une chambre de combustion 9 pour permettre la combustion de gaz issu du circuit.

L'organe rotatif 6 de la turbine comporte des aubes 10.

La turbine 5 comporte une entrée 11 connectée au circuit 2 pour recevoir le gaz issu de l'évaporation du carburant, et une sortie 12 pour l'évacuation de gaz issu de la combustion dans la turbine.

La turbine comporte des entrées d'air 13 pour permettre la combustion.

Le circuit 2 comporte un organe de régulation 15 agencé pour sélectivement autoriser ou empêcher la circulation de gaz issu du réservoir à carburant 3 vers la turbine 5.

Le générateur électrique 7 est connecté électriquement à une batterie 16, notamment une batterie 12V.

## Revendications

1. Système (1) de production d'énergie électrique pour un véhicule automobile, ce système comportant :
- un circuit (2) agencé pour être relié à un réservoir de carburant (3) du véhicule et agencé pour recevoir un gaz issu de l'évaporation du carburant,
- une turbine à gaz (5) comportant un organe rotatif (6) agencé pour fournir un couple mécanique de sortie, cette turbine à gaz étant agencée pour produire le couple mécanique à partir de la combustion du gaz provenant du circuit,
- un générateur électrique (7) accouplé à l'organe rotatif de la turbine et recevant le couple de sortie pour produire de l'énergie électrique.

2. Système selon la revendication précédente, le générateur est agencé pour générer une puissance électrique inférieure à 5 kWatts, notamment inférieure à 3 kWatts, par exemple inférieure à 1 kWatt.

3. Système selon l'une des revendications précédentes, la turbine présente un diamètre extérieur inférieur à 50 mm, notamment inférieur à 25 mm, par exemple inférieur à 20 mm.

4. Système selon l'une des revendications précédentes, la turbine à gaz comporte une chambre de combustion (9) pour permettre la combustion de gaz issu du circuit.

5. Système selon l'une des revendications précédentes, l'organe rotatif de la turbine comporte des aubes (10).

6. Système selon l'une des revendications précédentes, la turbine comporte une entrée (11) connectée au circuit pour recevoir le gaz issu de l'évaporation du carburant, et au moins une sortie pour l'évacuation de gaz issu de la combustion dans la turbine.

7. Système selon l'une des revendications précédentes, la turbine comporte au moins une entrée d'air (13) pour permettre la combustion.

8. Système selon l'une des revendications précédentes, le circuit comporte un organe de régulation agencé pour sélectivement autoriser ou empêcher la circulation de gaz issu du réservoir à carburant vers la turbine.

9. Système selon l'une des revendications précédentes, le générateur électrique (7) est connecté électriquement à une batterie, notamment une batterie 12V.

10. Système selon l'une des revendications précédentes, le système est dépourvu de canister pour le stockage de gaz issu de l'évaporation du carburant.

11. Système selon l'une des revendications précédentes, le système est agencé de sorte que le gaz issu de l'évaporation du carburant n'est pas utilisé dans la combustion du moteur à combustion du véhicule.
